Europäisches Patentamt

European Patent Office

Office européen des brevets

(19)

(11) **EP 0 649 874 B1**

(12) **EUROPEAN PATENT SPECIFICATION**

(45) Date of publication and mention
of the grant of the patent:
**22.01.2003 Bulletin 2003/04**

(51) Int Cl.[7]: **C08L 67/02**, C08J 3/20,
C08J 5/18, B29C 51/00

(21) Application number: **94203052.9**

(22) Date of filing: **20.10.1994**

(54) **Nucleation of crystallization in polyesters**

Nukleierung der Kristallisation von Polyestern

Nucléation de cristallisation de polyesters

(84) Designated Contracting States:
**AT BE CH DE DK FR GB IT LI LU NL SE**

(30) Priority: **22.10.1993 US 142260**
**22.10.1993 US 142264**

(43) Date of publication of application:
**26.04.1995 Bulletin 1995/17**

(73) Proprietor: **M&G POLIMERI ITALIA SPA**
**03010 Patrica (Frosinone) (IT)**

(72) Inventors:
• **Richeson, Donald Edward**
**North Canton, Ohio 44720 (US)**
• **Perkins, William George**
**Akron, Ohio 44303 (US)**
• **Johnston, Walter Francis**
**Akron, Ohio 44278 (US)**

(74) Representative: **Gerbino, Angelo et al**
**Jacobacci & Partners S.p.A.**
**Corso Regio Parco, 27**
**10152 Torino (IT)**

(56) References cited:
**EP-A- 0 160 138**     **EP-A- 0 335 159**
**EP-A- 0 390 723**     **EP-A- 0 552 520**
**DE-A- 1 694 217**     **US-A- 3 960 807**
**US-A- 4 572 852**     **US-A- 5 023 137**

• **CHEMICAL ABSTRACTS, vol. 107, no. 2, 13 July**
**1987, Columbus, Ohio, US; abstract no. 8310, &**
**JP-A-62 034 950 (JAPAN EXLAN CO., LTD.) 14**
**February 1987**
• **DATABASE WPI Week 9009, Derwent**
**Publications Ltd., London, GB; AN 90-063281 &**
**JP-A-2 016 130 (DIA FOIL KK) 19 January 1990**
• **DATABASE WPI Week 8415, Derwent**
**Publications Ltd., London, GB; AN 84-091648 &**
**JP-A-59 038 255 (UNITIKA KK) 2 March 1984**

Remarks:
The file contains technical information submitted
after the application was filed and not included in this
specification

## Description

This invention relates to foamable polyester compositions having nucleating agents to promote crystallization. The compositions are useful for making foamed articles by thermoforming the nucleated crystalline polyesters.

Polyesters are widely used for articles for which non toxicity, good heat stability, resistance to deformation and ease of manufacture are important. Polyethylene terephthalate ("PET") has, for example, become the material of choice for dual ovenable (the ability to be used in conventional ovens as well as microwave ovens) food packages and trays. Incorporating gas into the polyester to provide a cellular structure also has advantages in many applications, and especially dual ovenable food trays. The cellular structure not only reduces the weight of polyester needed in sheet and trays, but also provides heat insulation. Food trays and similar articles are generally made from polyester by thermoforming. In one process of thermoforming, polyester sheet is preheated to its deformation temperature and made to conform to the contours of a mould by vacuum assist (vacuuming it into the mould), air pressure assist (blowing it into the mould), plug assist and matched mould assist (forcing it into the mould). In another process extruded melted sheet is cooled to the proper forming temperature before moulding by the means described above. It is essential that the polyester, after forming, be partially crystalline to maintain good dimensional stability, stiffness and other desirable properties. Crystallinity of from 15 to 32 percent after forming is normally adequate and customary. It is a happy coincidence that polyesters crystallize upon heating, so that the thermoforming step plus a period of heat treatment (holding the article at the moulding temperature for a time) results in the desired crystallinity. Of course, the polyester must be properly selected, and have added to it a suitable crystallization nucleation agent, i.e. an agent (usually particulate) which initiates and provides a starting point on which crystallites can form. It is also necessary to provide some improvement in impact strength (to prevent or at least reduce shattering). This is usually achieved by adding a small amount of a polyolefin component to the polyester blend.

For cellular polyester structures, gas addition is conveniently accomplished in an extruder used to form the sheet. While other methods can be used, the injection of gas (nitrogen is preferred for cost, availability, convenience and environmental friendliness) into the barrel of the extruder is customary. However, the composition and conditions must be carefully selected and controlled to get the desired result. Extruded sheet is normally fairly thin, for example about 0.030 inch (0.762 mm). It is necessary, therefore, to have many very small bubbles; large bubbles result in a rough surface and, if too large, in holes in the sheet. Extrusion speed is also important. Extrusion cannot be faster than bubble formation. Since bubbles form around seed particles, a suitable nucleating agent of sufficiently small particle size can speed bubble formation, extrusion and thermoforming.

Thermoforming of, for example, thin walled articles from unmodified polyester films and sheeting with heat treatment in a heated mould can achieve adequate crystallinity (i.e. about 25 percent) but not satisfactory impact strength nor economically acceptable cycle times. The required heat treatment is also too long (i.e. 30 to 60 seconds depending upon the temperature) to attain the desired crystallinity and the article is often difficult to remove from the heated mould. These are not new problems, and the industry has come a long way in overcoming the limitations. It is known to add polyolefins and inorganic nucleating agents, or to add only polyolefins, such as polyethylene or polypropylene, to speed crystallization and improve impact strength. There is, however, a never ending quest for yet better processing and product properties, and economics dictate ever faster cycle times.

So, there is a continuing need to decrease crystallization time and increase efficiency, and to be able to achieve fast crystallization on heating from a solid sheet or in cooling from a newly extruded melted sheet. For cellular polyesters, a nucleating agent that allows fast bubble formation as well as fast cycle times is also very desirable.

The present invention provides a composition for making cellular sheets of crystalline polyester and thermoformed articles as indicated in claim 1.

This invention is a polyester composition suitable for preparing sheet that rapidly crystallizes when thermoformed comprising polyethylene terephthalate and a LLDPE nucleating agent which has excellent nucleating properties both on heating and on cooling through its softening point. Optionally, the composition also contains a heat stabilizer.

Of known thermoplastic, crystallizable polyesters, polyethylene terephthalate (PET) has very desirable high temperature dimensional stability, chemical, oil, and solvent resistance and the ability to pass microwave radiation without absorbing or reflecting it. These properties make it excellent for use in food containers used in high temperature service. Thus the invention particularly addresses the desirable rapid crystallization of, and (for celluarized applications) bubble formation in, PET suitable for use in thermoforming articles for application in high temperature service such as ovenable food trays.

Polyethylene terephthalate polymer is made by known polymerization techniques from terephthalic acid or its lower alkyl ester (dimethyl terephthalate) and ethylene glycol. Terephthalic acid or dimethyl terephthalate is either esterified or transesterified and then polycondensed with ethylene glycol to high molecular weight. The PET utilised in this invention may be comprised of repeat units derived from the terephthalic acid or dimethyl terephthalate and ethylene glycol. It may be modified to contain a small amount of repeat units derived from diacids other than terephthalic acid and/or glycols other than ethylene glycol. For example, small amounts of isophthalic acid or a naphthalene dicarboxylic acid (or the corresponding diesters) can be used. Also, diols containing from 3 to 8 carbon atoms, such as 1,4-butane diol, can be used as part of the glycol component content. Normally, no more than about five (5) weight percent of the repeat units should be other than terephthalic acid (or dimethyl terephthalate) and ethylene glycol.

For the present invention the PET (or modified PET)has an intrinsic viscosity (I.V.) of at least 0.6 dl/g, and in most cases an I.V. of between 0.65 and 1.4, suitably 0.65 and 1.2 dl/g. For cellularized applications it is preferred that the PET has an I.V. in the range of from 0.8 to 1.4 dl/g, e.g. 0.8 to 1.2 dl/g, and especially preferred that it be above 0.9 dl/g. Intrinsic viscosity,a measure of molecular weight,is defined as the limit of the fraction in v/C as C, the concentration of the polymer solution, approaches 0, in which v is the inherent viscosity that is measured at several different concentrations in a 60/40 mixed solvent of phenol and tetrachloroethane at 30°C.

An essential component of this invention is a compound or composition that acts to nucleate rapid crystallization of the PET both when heated from a low temperature and when cooled from its molten state. In addition, the nucleating component must not significantly reduce the impact strength of the composition. It has been found that fluorocarbon polymers and fluorinated copolymers work very well for this purpose. Polytetrafluoroethylene (commonly known as PTFE) is used. Teflon (a trade mark), a product of E.I. du Font de Nemours & Co. is very suitable and meets the requirements for thermoformed articles described above. Other manufacturers of polytetrafluoroethylene include Daikin Kogyo (Polyflon - trade mark)), Hoechst (Hostaflon - trade mark), ICI (Fluon - trade mark)) and Ausimont (Algoflon and Halon - trade marks). Powder form of polytetrafluoroethylene (e.g. less than 20 μm, suitably less than 10 μm, particles) is convenient for use in the composition of this invention.

A classification system has been devised to determine suitable nucleating agents. This system is based on the "Nucleation Index" of the nucleating compound or composition. The Index is based on the aggressiveness of nucleation/crystallization during either heating or cooling from the molten state. It is obtained by multiplying the "good" parameters, and dividing by the "bad" parameters, in each (heating or cooling) mode. For the heating mode, high percent crystallinity and exotherm slope are considered "good", whereas high peak temperature and wide crystallization range were considered "bad". In the cooling mode, high peak temperature is considered "good", indicating earlier onset of crystallization, whereas the other parameters are the same as for the heating mode. Thus, in the heating mode, the Nucleation Index, $NI_H$, is shown by the following equation:

$$NI = (Xc)\ (Slope)\ /\ (Peak)\ (Range)$$

and in the cooling mode

$$NIc = (Xc)\ (Slope)\ (Peak)\ /\ (Range)$$

where:

Xc:  degree of crystallinity of the PET
Slope:  steepness of crystallization exotherm onset
Peak:  peak crystallization temperature
Range:  temperature range of crystallization exotherm

A nucleating composition comprised of a linear low density polyethylene or LLDPE (such as the product of Exxon Chemical Co.of trade name ESCORENE LL 1001.59) and a heat stabilizer is used as the base point and assigned an NI value of 100 for both the heating and cooling mode. The base nucleating agent is included at 3 percent by weight of the PET component and the heat stabilizer is Ethanox 330 (trade name of an antioxidant made by Ethyl Corporation) in an amount of 0.015 percent. This nucleating agent is described in detail in U.S. Patent Specification No. 4,572,852.

To determine the Nucleation Index approximately 10 mg of sheet (of approximately 30 mil (0.76 mm) thickness) of polyester to be evaluated is crimped into an aluminum pan from a Mettler TA3000 series calorimeter equipped with a DSC 30 cell (or equivalent) and placed in the DSC furnace in a nitrogen blanketed atmosphere. The DSC is programmed to heat from 35°C to 300°C at 10°C per minute, and to hold the sample at 300°C for 2 minutes, then cool back to 35°C at the same rate.

Crystallization exotherms are evaluated for position on the temperature axis, peak temperature, and slope (angle) of the onset side. Included areas under both exotherms and endotherms are determined by use of a DSC TC10A computer or equivalent. Percent crystallinity is calculated using 140 joules/g as the heat of fusion for a pure PET crystal.

Any nucleating compound or composition having a $NI_H$ and a NIc above 110 and desirably one that does not reduce impact strength measured at -20°F (-29°C) below about 300 grams is suitable for the composition and other embodiments of this invention. Impact strength is measured by the ASTM 1709 modified falling dart method.

The nucleating compound should be present in the composition of the invention in an amount in the range of from 0.01 to 10 weight percent. Preferably an amount in the range of from 0.05 to 0.6 weight percent, more preferably 0.1 to 0.3, is utilised.

It has further been found that polytetrafluoroethylene (PTFE) of sufficiently small particle size not only results in rapid crystallization of a PET sheet moulding but also gives excellent bubble formation in foamed sheets, upon gas addition to molten PET, and does not significantly reduce the impact strength of the composition. Teflon, a trade-name product of the E.I. du Pont de Nemours & Co. (and also abbreviated as PTFE) of sufficiently small particle size is again very suitable and meets all the requirements described above; also suitable are the other commercially available types of polytetrafluoroethylene: Polyflon, Hostaflon, Fluon, Algoflon and Halon. For this application, it is necessary that the polytetrafluoroethylene be a powder (of a particle size of less than about 20 µm) SP for use in the composition of this invention. It is preferable that the particles be as small as possible; particles of less than about 12 µm, e.g. 7 to 12 µm, work well. In order to produce fine particles it is sometimes necessary that the additive be ground or otherwise mechanically reduced in size. Since ordinary PTFE tends to agglomerate upon mechanical working or grinding, it is customary to use or produce lower molecular weight polymer for a small particle size product. It is possible to reduce PTFE molecular weight by irradiating the polymer, or to polymerize under special conditions. PTFE of small particle size available from Ausimont is irradiated. Some grades of PTFE available from Dupont, such as the MP grades, are of sufficiently small particle size without irradiation; these are generally preferred. For some applications, such as disposable dual ovenable trays, the irradiated grades do not meet FDA standards. In those applications the non-irradiated PTFE is required. For cellularised compositions, polytetrafluoroethylene is suitably present in an amount in the range of from 0.01 to 5 weight percent, preferably 0.05 to 0.5 weight percent, more preferably in the range of from 0.1 to 0.3 weight percent.

In addition to the nucleating agent, the composition also contains linear low density polyethylene and indeed this is desired, as it not only will increase nucleation and perhaps bubble formation but it also is very influential in providing good thermoforming mould release properties. The polyolefin is used in an amount of from 0.1 to 10 percent by weight and preferably in the range of from 0.5 to 5, e.g. 1 to 5 percent by weight, more preferably from 0.5 to 3 weight percent; the range of from 0.9 to 1.2 weight percent is most preferred. Polyolefins are linear low density polyethylenes such as that made by Exxon Chemical Co. under trade name ESCORENE LL 1001.59 and DOWLEX 2045 and 2035 made by The Dow Chemical Co.,. Since it is desirable that the polyolefin be completely mixed with the polyester, it may be added during the sheet extrusion step in which case the polyolefin is carried throught the extruder and it is homogeneously mixed with the PET. It is also possible to mix the polyolefin by other mechanical means,but extruder mixing is especially preferable when using separated packages of polyester and additives as described below. Preferably however the polyolefin is preblended with the nucleating agent, e.g. via dry blending or extrusion (melt blending).

The composition of this invention may also, optionally, contain one or more heat stabilizers. A heat stabilizer is especially desirable if the composition is to be used to make an article for use in high temperature service, as, for example, an ovenable food container or tray. An effective heat stabilizer will provide protection to the composition at temperatures associated with such product use (e.g. 200°C. and the forming processes to which the composition may be subjected. Useful heat stabilizers are antioxidant compounds. Most suitably the heat stabilizer forms part of component (c), and is preblended with component (c) for incorporation into the composition.

Representative heat stabilizers include alkylated substituted phenols, bisphenols, thioacrylates, aromatic amines, organic phosphites, and polyphosphites. Particular aromatic amines include primary polyamines, diarylamines, bisdiarylamines, alkylated diarylamines, ketone diarylamine condensation products, aldehyde-amine condensation products and aldehyde imines. Suitable polyphenols include, tetrakis(methylene-3(3,5-di-t-butyl-4-hydroxyphenyl)propionate)methane and 1,3,5-trimethyl-2,4,6-tris(3,5-di-t-butylbenzyl)benzene. Ethanox 330 (a product of Ethyl Corporation - Ethanox is a trade mark) is a preferred commercial stabilizer.

An effective amount of stabilizer is generally the range of from 0.005 to 2 percent by weight based on the total weight of polyester composition, and usually from 0.01 to 0.5 percent. The amount will be determined by the amount and effectiveness of the stabilization needed, the severity of the application, and its solubility.

Thus, a composition of the invention suitable for cellular sheet and articles made from such sheet, preferably has a major portion of PET having an I.V. in the range of from 0.65 to 1.4 dl/g, in the range of from 0.01 to 5, e.g. 0.01 to 3, weight percent PTFE having a particle size less than 20 µm, and preferably less than 12 µm, in the range of from 0.1 to 10, e.g. from 0.1 to 6, weight percent LLDPE, and in the range of from 0.005 to 2 weight percent of a heat stabilizer, such as Ethanox 330 . A preferred composition contains 0.1 to 0.3, most preferably 0.1, weight percent PTFE, 1.1 weight percent LLDPE, and 0.006 weight percent Ethanox 330, in PET having an I.V. of about 0.95 dl/g.

Pigments and colourants, preferably non-nucleating compounds, may also be added to the composition. For example, titanium dioxide may be used to produce a white product. Other colourants include phthalocyanine blue, solvent red 135, and disperse yellow 64 (CAS No. 10319-14-9).

The compositions may be easily made by blending PET with the nucleating agent and heat stabilizer, colourant and other additives either during or prior to melting for extrusion. Such blending is effected, or completed, at temperatures above the melting point of PET (260°C for the homopolymer) and generally between 260 and 315°C. Normally a temperature of between 280°C and 300°C is very suitable. In commercial operations, blending is generally carried out in an extruder or extruders that provide sufficient shear to give adequate mixing and achieve the desired complete dispersion of the additives throughout the PET polymer.

It is often expedient to package the polyester and the nucleating agent (and perhaps other additives) separately. Since polyester is sold for a variety of applications, some requiring nucleating agent and some not, separate packaging permits tailoring/variety in selection of the nucleating agent and other additives (such as heat stabilizer) to the specific application. Moreover, it is frequently required that the PET be dried before extrusion, and drying (as with hot air) may be at higher temperatures than is suitable for components of the additive package. Thus, a kit of separate packages of polyester and nucleating additives may be provided. It is preferred that the polyester (in pellet or cube form) be packaged without additives in suitable, sealable, and transportable containers. Various size containers ranging from gaylords to railcars maybe used. Separate packages of additives are prepared to match the size of the polyester package or usage, for example an additive package comprising 0.309 pounds (0.14 kg) polytetrafluoroethylene nucleating agent would be matched with 100 pounds (45 kg) of polyester to provide a 0.3 percent by weight blend, or 0.109 pounds (0.05 kg) with 100 pounds (45 kg) to provide a 0.1 percent by weight blend. Of course for half the polyester, half the nucleant amount would be packaged to achieve the same proportion.

The polyolefin additive may also be added to the nucleant package. Thus, for a desired blend of 3.0 percent polyolefin and 0.3 percent nucleant, a package to match 100 pounds (45kg) of PET would comprise 3.09 pounds (1.40 kg) polyolefin and 0.309 pounds (0.14 kg) polytetrafluoroethylene, or for a desired blend-of 1.0 percent polyolefin and 0.1 weight percent nucleant, a package to match 100 pounds (45 kg) of PET would comprise 1.09 pound (0.5 kg) of polyolefin and 0.109 (0.05 kg) pounds polytetrafluoroethylene. It is preferred that a heat stabilizer be blended into the polyolefin before it is mixed with the PET. For example about 0.6 weight percent (based on total blend weight) Ethanox 330 (a stabilizer) could be used. A very suitable nucleant package would contain PTFE, LLDPE and a heat stabilizer, blended together in an extruder. The melted LLDPE would act as a carrier for the PTFE particles, which would be released when the nucleant package is remelted for mixing with PET and extrusion into sheet(s). More preferably the PTFE and polyolefin (with, optionally, the heat stabilizer) are blended and formed into pellets; e.g. via extrusion to form pellets.

The contents of these packages are mixed at the site of use, or as required. Since it is important that the components be well mixed, it is preferred that they be mixed by melt blending as described above and preferably in an extruder or other (high-)shear mixer. When used for film and sheet, the components are mechanically blended upon or prior to introduction into the film extruder and the melted blend is extruded through an elongated die onto a moving roll or carrier, cooled to quench and otherwise prepared for further use. It is especially convenient to blend the components of the kit in this way. An alternative method involves the preliminary step of masterbatching a portion (e.g. about one quarter by weight) of polyolefin with PET (e.g. about three quarters of PET). The film is produced by conventional extrusion or casting methods. As will be appreciated, there are numerous ways in which the kit or kit components can be utilised.

A cellular sheet (and film) is suitably made by mixing at least one inert gas with molten polyester in a melt or plasticating extruder. The gas may be any gas that does not chemically react with the polyester at elevated processing temperatures. Suitable gases include nitrogen, carbon dioxide, helium, argon and krypton: nitrogen is preferred. In the extruder the screw drive pushes the molten resin containing discrete gas cells through a metal die that shapes the sheet into the desired form. Generally single screw extruders are used, but multiple screw, such as twin or tandem screw, machines may also be used.

In a single screw plasticating extruder, resin (as solid particles) is fed into the extruder by gravity from a hopper into the screw channel (or the solids conveying zone) where it is mixed, compressed, heated and conveyed along the channel by mechanical action of the screw. The barrel of the extruder is heated electrically or by fluid heat exchange. The resin is heated above its melting point and melted in a melting zone. From the melting zone where the resin is melted and further mixed, it is pumped into the melt conveying zone of the extruder. It is in this zone, with the resin well above its melting point, that gas is injected. Sufficient agitation is needed to obtain essentially homogeneous dispersion of gas bubbles. The molten resin in the melt conveying zone is at a lower temperature than in the melting zone and accordingly has higher viscosity. A blister ring (or collar) located upstream of the gas injection point prevents gas from back mixing through the melting zone and escaping through the feed hopper. The molten resin is pumped into a metering pump and extruded through the sheet die. The metering pump and extrusion die are maintained at a lower temperature than the barrel around the melt conveying zone to minimize rupture and diffusion of gas bubbles in the resin. The sheeting die is approximately rectangular with a narrow slit. Upon leaving the die, the resins will swell or expand somewhat, to an extent dependent upon the melt temperature, the length-to-width ratio of the die, and the sheer stress at the die walls. Circular dies are sometimes used and the extruded tube slit to form flat sheet. The cellular sheet is cooled without stretching by cold air, immersion in a cooled fluid bath or passage over temperature-controlled rolls. The cellular sheet is substantially amorphous.

Cellular sheet, so produced, contains sufficient gas cells to give it a density in the range of from 0.04 to 1.25 $g/cm^3$, suitably from 0.09 to 1.1 $g/cm^3$, and more typically a density of from 0.70 to 1.15 $g/cm^3$. The thickness of such cellular sheet is preferably in the range of from 10 to 100 mils (0.25 to 2.5 mm).

In another aspect, this invention provides a process for producing heat set, sheet or thermoformed article(s), suitably thin-walled articles, from the polyester compositions described above using conventional thermoforming, and the sheet or article(s) made therefrom. Thin-walled as used in this context means articles having wall thickness less than 1 millimetre (about 40 mils). Greater wall thickness may be acceptable if sufficient means are used to uniformly heat the sheet without excess crystallization. The complete technique may consist of the following steps:

1. Forming a substantially amorphous sheet from the homogeneously blended PET/nucleant composition.
2. Preheating the sheet until it softens and positioning it over the mould.
3. Drawing the preheated sheet onto the heated mould surface.
4. Heat-setting the formed sheet by maintaining it in contact against the heated mould for sufficient time for partial crystallization.
5. Stripping the part out of the mould cavity.

The sheet is conventionally made by extrusion from a flat die and then quenching immediately to reduce crystallization since excess crystallization at this stage makes it difficult to thermoform.

An alternative method, sometimes known as a "melt-to-mould" process involves the steps outlined above except that in steps 1 and 2 the (extruded) sheet is maintained above its glass transition temperature and is passed directly onto the mould surface as in step 3, eliminating the need to reheat the formed sheet. In this method, it is necessary that the polyester blend be capable of rapid crystallization on cooling; In the first outlined process, it is necessary that the polyester blend rapidly crystallize on heating. The nucleant system of the present invention is capable of, and especially desirable for, use in either forming process as it helps induce sufficiently rapid crystallization on cooling as well as on heating.

The term substantially amorphous as used herein in relation to sheet indicates a sheet having a level of crystallinity low enough to enable thermoforming with satisfactory mould definition and part formation. For currently available thermoforming processes, the level of crystallinity should not exceed about 10 percent.

Preheating the substantially amorphous sheet prior to positioning it over the thermoforming mould is necessary to achieve the very short moulding times required for viable commercial operation. Generally a 5 to 12, e.g. 5 to 7, second cycle time is acceptable. The sheet must be heated above its glass transition temperature (Tg) and below the point that it sags excessively during positioning over the mould cavity. In the melt-to-mould process, the sheet is cooled from its melt temperature to the appropriate temperature. The preferred temperature is in the range of from 220°C to 160°C, and most preferably in the range from 220°C to 170°C.

Any of the known thermoforming methods may be used, including vacuum assist, air assist, mechanical plug assist or matched mould forming. The mould should be preheated to a temperature sufficient to achieve the degree of crystallinity desired. Selection of an optimum mould temperature is dependent upon the type of thermoforming equipment, configuration and wall thickness of the formed articles and other factors. The operable range of mould temperatures is in the range of from 150°C to 215°C. The preferred range is from 160°C to 190°C.

Heat setting is a term describing the process of thermally inducing partial crystallization of a polyester article without appreciable molecular disorientation. Heat setting is achieved by maintaining intimate contact of the film or sheet with the heated mould surface for a sufficient time to achieve the desired level of crystallinity. Crystallinities of from 10 to 40 percent are suitable. For containers used in high temperature food service, crystallinity should be above about 15 percent. It is preferred that crystallinity be in the range of from 20 to 40 percent to give the excellent dimensional stability desired for most applications.

The term glass transition temperature means that temperature or temperature range at which a change in slope appears in the volume versus temperature curve for a polymer and defines a temperature below which the polymer exhibits a glassy characteristic and above which the polymer exhibits a rubbery characteristic. The glass transition (Tg) of PET in various states has been reported as follows: amorphous: 67°C; crystalline: 81°C; oriented and crystalline: 125°C.

Since a partially crystalline finished article is necessary for good dimensional stability at high temperature, knowledge of the degree of crystallinity or percent crystallinity is of considerable importance. Differential scanning calorimetry (DSC) is a convenient method of measuring percent crystallinity. Density may also be used as an indicator of percent crystallinity: a calibrated gradient column may be used for determining density at a particular temperature; the density value is then converted (using the known relationship of density to crystallinity) to a percent crystallinity.

The terms crystallization temperature and crystallization onset are used interchangeably to mean the temperature or temperature range at which a regularly repeating morphology, brought about by a combination of molecular mobility and secondary bonding forces, is induced in a polymer over a molecular distance of at least several hundred angstroms. The crystallization temperature or crystallization onset can be visually observed as the point at which a substantially amorphous unoriented sheet of PET/polyolefin changes from a translucent, hazy appearance to a white appearance.

The invention will now be illustrated by means of the following Examples.

Example 1 (For reference purposes only)

A base polyethylene terephthalate (PET), designated TTF 9506, with an I.V. of 0.95 dl/g was used to demonstrate the advantages of this invention. The base polymer was dried in a hopper-dryer for several hours before dry blending with the nucleation additive to be evaluated. Additives were dried in a vacuum oven at various temperatures depending upon their heat stability. The additives and base polymer were blended and extruded using a 2.5 inch (63.5 mm) diameter Egan extruder. For crystallization behaviour determination, approximately 10 mg of sheet was crimped into an aluminum pan of a Mettler TA3000 series calorimeter, equipped with a DSC30 cell, and placed in the DSC furnace in a nitrogen blanketed atmosphere. The DSC was programmed to heat from 35°C to 300°C at 10 degrees per minute, hold the sample at 300°C for 2 minutes, then cool back down to 35°C at the same rate.

Crystallization exotherms were evaluated for position on the temperature axis, peak temperature, and slope (angle) of the onset side. Included areas under both exotherms and endotherms were determined using a DSC TC10A computer. Percent crystallinity was calculated using 140 joules/g as the heat of fusion for a pure PET crystal. [See A. Metha, U. Gaur, and B. Wunderlich, Journal of Polymer Science -Physics, 16, 289 (1978)]

Table I lists the polymers/additives used. Compositions, and amounts added to the base polymer (TTF9506), are shown. NA-1 is a LLDPE (Exxon ESCORENE LL 1001.59 - ESCORENE is a trade mark) resin mixed with 0.6 weight percent ETHANOX 330 (ETHANOX is a trade mark). The PTFE used was Polymist F 5A polytetrafluoroethylene obtained from Ausimont, in powdered form (less than 6 µm particles). Moldpro is a proprietary lubricant obtained from Witco Corporation, $BaSO_4$ was in powdered form, as obtained from HYTOX Corporation. A900 is a liquid crystalline polyester in pellet form obtained from Hoechst Celanese. Table II details the crystallization results on heating from ambient to 300°C. Column 1 lists the additives. Column 2 lists the percent crystallinities calculated from the area under the melting endotherms representing total crystallinity of the starting polymer plus that developed during the heating scan. Column 3 shows the slopes of the onset side of the crystallization exotherms; a steeper slope (higher angle) indicating faster crystallization. The temperatures in column 4 were measured at the peak of the crystallization exotherms, and the (temperature) widths of the exotherms are given in the last column. The last entry (row) at the bottom of the table is the base polymer, without added nucleant.

Table III details the crystallization results upon cooling the melt back to ambient temperature. The data columns are analogous to those in Table II, except for TOTAL CRYSTALLINITY, which is the area under the crystallization exotherm. All formulations containing LLDPE (NA-1) showed an additional small exotherm at about 107°C, resulting from crystallization of the LLDPE.

The results from Tables II and III were used to determine the "Nucleation Index" of each additive (see Table IV). This Index is based on the aggressiveness of nucleation/crystallization during either heating or cooling. As previously indicated, the Index is obtained by multiplying the "good" parameters, and dividing by the "bad" parameters, in each (heating or cooling) mode. The equations shown below were used. For the heating mode, high percent crystallinity and exotherm slope were considered "good", whereas high peak temperature and wide crystallization range were considered "bad". In the cooling mode, high peak temperature was considered "good", indicating earlier onset of crystallization, whereas the other parameters were as discussed above, for the heating mode.

Thus, in the heating mode

$$NI_H = (Xc) \, (Slope) \, / \, (Peak) \, (Range)$$

and in the cooling mode

$$NIc = (Xc) \, (Slope) \, (Peak) \, / \, (Range)$$

where:

Xc:      degree of crystallinity
Slope:    steepness of crystallization exotherm onset

Peak:      peak crystallization exotherm temperature
Range:     temperature range of crystallization exotherm

For the Nucleation Index (NI), NA-1 is assigned a value of 100.

TABLE I:

| DESCRIPTION AND CONCENTRATION OF ADDITIVES* | | |
|---|---|---|
| ADDITIVE | DESCRIPTION | WEIGHT % |
| NA-1 (Control) | LLDPE + antioxidant | 3.0 |
| PTFE | Polytetrafluoroethylene | 0.3 |
| PTFE + NA-1 | PTFE/NA-1 | 0.3/3.0 |
| BaSO4 | Barium Sulfate | 0.5 |
| BaSO4 + NA-1 | BaSO4/NA-1 | 0.5/3.0 |
| MOLDPRO | Proprietary lubricant (Witco) | 0.5 |
| MOLDPRO + NA-1 | Lube/NA-1 | 0.5/3.0 |
| A900 | Vectra A900 LCP (Hoechst Celanese) | 0.3 |
| A900 + NA-1 | A900/NA-1 | 0.3/3.0 |

* Base polymer was 0.95 dl/g IV PET (TTF9506)

TABLE II:

| CRYSTALLIZATION RESULTS ON HEATING (Ambient to 300°C) | | | | |
|---|---|---|---|---|
| ADDITIVE | TOTAL CRYSTALLINITY %* | SLOPE, degrees | PEAK TEMP (°C) | TEMP RANGE (°C) |
| NA-1(Control) | 26.1 | 84.0 | 130.5 | 116 - 159 |
| PTFE | 25.8 | 87.0 | 129.5 | 118 - 158 |
| PTFE + NA-1 | 25.1 | 85.0 | 128.1 | 114 - 150 |
| BaSO4 | 25.8 | 86.5 | 131.8 | 122 - 160 |
| BaSO4 + NA-1 | 23.2 | 86.5 | 128.1 | 115 - 150 |
| MOLDPRO | 27.1 | 86.5 | 129.1 | 112 - 150 |
| MOLDPRO+ NA-1 | 26.5 | 85.5 | 124.7 | 112 - 160 |
| A900 | 25.7 | 87.0 | 128.7 | 116 - 158 |
| A900 + NA-1 | 25.4 | 86.0 | 127.4 | 114 - 159 |
| Control PET | 19.0 | 87.0 | 131.8 | 122 - 160 |

* Area under the melting endotherm

TABLE III:

| CRYSTALLIZATION RESULTS ON COOLING (300°C to Ambient) | | | | |
|---|---|---|---|---|
| ADDITIVE | TOTAL CRYSTALLINITY %* | SLOPE degrees | PEAK TEMP (°C) | TEMP RANGE (°C) |
| NA-l (control) | 24.9 | 81.0 | 181.2 | 217-147 |

* Area under the crystallization exotherm

TABLE III:   (continued)

| CRYSTALLIZATION RESULTS ON COOLING (300°C to Ambient) | | | | |
|---|---|---|---|---|
| ADDITIVE | TOTAL CRYSTALLINITY %* | SLOPE degrees | PEAK TEMP (°C) | TEMP RANGE (°C) |
| PTFE | 28.0 | 88.0 | 207.6 | 220-170 |
| PTFE + NA-I | 27.9 | 88.0 | 204.9 | 217-160 |
| BaS04 | 27.7 | 87.0 | 202.5 | 217-157 |
| BaSO4 + NA-I | 26.7 | 87.5 | 207.5 | 220-180 |
| MOLDPRO | 30.2 | 84.0 | 189.4 | 220-149 |
| MOLDPRO + NA-I | 28.9 | 85.0 | 190.3 | 220-150 |
| A900 | 29.6 | 87.5 | 201.5 | 217-163 |
| A900 + NA-I | 28.3 | 87.0 | 194.7 | 217-150 |
| (TTF9506) | 27.6 | 84.0 | 184.7 | 220-147 |

* Area under the crystallization exotherm

TABLE IV:

| NUCLEATION INDEX (CONTROL = 100) | | | |
|---|---|---|---|
| **HEATING** | | **COOLING** | |
| ADDITIVE | $NI_H$ | ADDITIVE | $NI_C$ |
| MOLDPRO | 122 | BaS04 + NA-1 | 232 |
| PTFE + NA-1 | 118 | PTFE | 196 |
| BaS04 | 114 | A900 | 185 |
| BaS04 + NA-1 | 113 | PTFE + NA-1 | 169 |
| PTFE | 111 | BaSO4 | 156 |
| A900 | 106 | A900 + NA-1 | 137 |
| NA-1 | 100 | MOULDPRO | 130 |
| A900 + NA-1 | 98 | MOULDPRO + NA-1 | 128 |
| MOLDPRO + NA-1 | 97 | TTF9506 | 112 |
| TTF9506 | 84 | NA-1 | 100 |

Example 2 (For reference purposes only)

Trays were made by extrusion of sheet in a laboratory extruder, by dry blending dried additive with dried PET as in Example 1. The trays and sheet have the properties shown in Table V.

Table V:

| Tray Properties | | | | | | |
|---|---|---|---|---|---|---|
| Sample Additive | I.V. dl/g | Impact, grams @ -20°C (-29°C) | Tray Specific gravity | Preheat time, s | Release time, s | Sheet temp °F (°C) |
| 3.0% NA-1 | 0.896 | 396 | 1.360 | 15 | 9-10 | 310 (154) |

Table V:   (continued)

| Tray Properties | | | | | | | |
|---|---|---|---|---|---|---|---|
| Sample Additive | I.V. dl/g | Impact, grams @ -20°C (-29°C) | Tray Specific gravity | Preheat time, s | Release time, s | Sheet temp °F (°C) | |
| 3.0 % NA-1 + 0.3 % A900 | 0.884 | 322 | 1.359 | 13 | 6-7 | 300 (149) | |
| 0.3 % A900 | 0.865 | 300 | 1.380 | 17 | 6 | 315 (157) | |
| 3.0 % NA-1 + 0.3 % PTFE | 0.863 | 491 | 1.361 | 14 | 5 | 300 (149) | |
| 0.3 % PTFE | 0.865 | 322 | 1.377 | 14 | 6 | 300 (149) | |
| 3.% NA-1 + 0.5% Moldpro | 0.834 | 266 | 1.394 | 12 | 6 | 300 (149) | |
| 0.5% Moldpro | 0.819 | 209 | 1.376 | 14 | 7 | 320 (160) | |
| 3.% NA-1 + 0.5% BaSO4 | 0.874 | 291 | 1.360 | 14 | 5-6 | 295 (146) | |
| 0.5% BaSO4 | 0.878 | 303 | 1.377 | 15 | 12 | 305 (152) | |
| No Additives | 0.878 | 263 | 1.374 | 15-16 | 13 | 315 (157) | |
| Impact was measured by ASTM 1709 modified dart method; Specific gravity by Mettler S.G. meter. Preheat time is the time required to heat the sheet to optimum forming temperature and Release time is the mould residence time. | | | | | | | |

As shown in Table V, A900, A900 with NA-1, PTFE, PTFE with NA-1, Moldpro, Moldpro with NA-1 and barium sulfate with NA-1 resulted in excellent mould release times and in that regard would make suitable nucleating additive for sheet and film compositions. PTFE, PTFE plus NA-1, A900, A900 plus NA-1 and barium sulfate did not impair the cold temperature impact strength to unacceptable levels (defined as above 300 grams impact at -20°F(-29°C)). Only PTFE and PTFE plus NA-1 provided acceptable properties in all three categories: NI greater than 110, Impact strength greater than 300 grams at - 20°F (-29°C), and mould release time less than 8 seconds.

Example 3 (to illustrate the invention)

Two rolls of cellularized sheet were made for thermoforming. Both were 30 mils (0.76 mm) thick, produced at a rate of 13.5 feet per minute (0.069 m/s) take up. To the first roll formulation (031693-1) was added 1.2 parts by weight of a nucleating composition. The nucleating composition was prepared by extruding together 7.857 pounds (3.56 kg) of NA-1' and 2.143 pounds (0.97 kg) of Ausimont PTFE designated XPH284. NA-1' is LLDPE (ESCORENE LL 1001.59 by Exxon Chemical co. plus 0.1 percent weight ETHANOX 330 - ESCORENE and ETHANOX are trade marks). This nucleant composition was dry blended before extrusion. After extrusion it was chopped into pellets of approximately 3.2 grams per 100 pellets in size.

This nucleant was added to a PET resin that had an I.V. of 0.95 dl/g(designated TTF 9552) in an amount 1.2 parts nucleant per 98.8 parts resin. The components were metred into the extruder at a rate to obtain the designated amounts. The second roll was a control (031693-2) using the NA-1' as a nucleant at a concentration of 3 parts NA-1' per 97 parts of resin by weight. A die opening of 12 mils (0.30 mm) by 30 inches (762 mm) wide at a rate of 50 rpm on the pump was used for extrusion.

Gas addition was effected by conventional procedures.

The density of the sheet as measured during extrusion was acceptable at slightly less than 0.9 g/cm$^3$. Visual examination of the sheet of each roll showed the 031693-1 to be of smaller cells and more uniform cells than the 031693-2 sheet.

Trays were made of each of those rolls at various thermoforming conditions. Tests for crystallinity, density, bake at 400°F (204°C) and thickness were made.

Trays were thermoformed using both rolls for comparison. The preheat time was varied on the Comet thermoformer for the series and the mould kept at 320°F (160°C). The time in the mould was held at either 10 or 20 seconds for crystallization. Other conditions of thermoforming are shown in Table VI.

The results in Table VII show that the sheet temperature for thermoforming had to be greater than 275°F (135°C) for good release from the mould. At sheet temperatures of less than 275°F (135°C) poor release from the mould was evident for both 031693-1 and 031693-2.

All samples passed the 400°F (204°C) bake cycle test, even those with the lowest preheat temperature.

Impact testing was conducted on a DYNATUP falling dart tester. The load was measured at break. It took more load to break the tray bottoms of the 031693-1 than for the control (031693-2). Also, deflection of the sample before break is greater with the PTFE nucleant material.

Crystallinity level was about 20 to 24 percent overall for both samples. The appearance of the sheet with PTFE nucleant (031693-1) is better in cell size and appearance, but has a rough surface similar to a fine sandpaper surface. The PTFE nucleant yields better and smaller cell size, slightly more strength, but no difference on bake at 400°F (204°C) or crystallinity.

During these tests the screens used in the extruder to prevent foreign material from the extruder became packed with PTFE. This can be solved by use of larger screens.

## TABLE VI

### Tray properties

| Preheat sec | Sheet temp. °F | (°C) | Seconds in 320 °F. Mould | Sheet No. | Pounds (N) Impact load* @ 77°F | | Inches (cm) Impact deflection * @ 77°F | | Inch · pounds (J) Impact energy* @ 77°F | | Thickness Mils (mm) | |
|---|---|---|---|---|---|---|---|---|---|---|---|---|
| 4 | 240 | (116) | 10 | 31693-1 | 23.16 | (103.07) | 0.12 | (0.31) | 147.2 | (16.64) | 24 | (0.61) |
| 6 | 275 | (135) | 10 | 31693-1 | 20.48 | (91.14) | 0.11 | (0.28) | 145.3 | (16.42) | 22 | (0.56) |
| 8 | 295 | (146) | 10 | 31693-1 | 23.64 | (105.20) | 0.12 | (0.31) | 144.5 | (16.33) | 23 | (0.58) |
| 10 | 340 | (171) | 10 | 31693-1 | 19.81 | (88.16) | 0.10 | (0.26) | 147.6 | (16.68) | 24 | (0.61) |
| 15 | 380 | (193) | 10 | 31693-1 | 19.81 | (88.16) | 0.10 | (0.26) | 147.2 | (16.64) | 25 | (0.64) |
| 20 | 425 | (218) | 10 | 31693-1 | 18.13 | (80.68) | 0.10 | (0.26) | 146.4 | (16.55) | 20 | (0.51) |
| 4 | 275 | (135) | 20 | 31693-1 | 20.81 | (92.61) | 0.10 | (0.26) | 147.7 | (16.69) | 24 | (0.61) |
| 6 | 310 | (154) | 20 | 31693-1 | 22.49 | (100.08) | 0.11 | (0.28) | 147.1 | (16.63) | 22 | (0.56) |
| 10 | 320 | (160) | 20 | 31693-1 | 17.45 | (77.66) | 0.09 | (0.23) | 146.8 | (16.59) | 24 | (0.61) |
| 15 | 420 | (216) | 20 | 31693-1 | 16.14 | (71.83) | 0.10 | (0.26) | 144.9 | (16.38) | 24 | (0.61) |
| 4 | 240 | (116) | 10 | 31693-2 | 16.11 | (71.69) | 0.09 | (0.23) | 146.3 | (16.54) | 25 | (0.64) |
| 6 | 280 | (138) | 10 | 31693-2 | 16.44 | (73.16) | 0.08 | (0.21) | 146.4 | (16.55) | 25 | (0.64) |
| 8 | 270 | (132) | 10 | 31693-2 | 15.44 | (68.71) | 0.08 | (0.21) | 148.3 | (16.76) | 25 | (0.64) |
| 10 | 350 | (177) | 10 | 31693-2 | 7.05 | (31.38) | 0.02 | (0.05) | 147.3 | (16.65) | 25 | (0.64) |

**TABLE VI (continued)**

**Tray properties**

| Preheat sec | Sheet temp. °F | (°C) | Seconds in 320 °F[1] Mould | Sheet No. | Pounds (N) Impact load* @ 77°F | | Inches (cm) Impact deflection * @ 77°F | | Inch · pounds (J) Impact energy* @ 77°F | | Thickness Mils (mm) | |
|---|---|---|---|---|---|---|---|---|---|---|---|---|
| 15 | | | 10 | 31693-2 | 14.16 | (63.02) | 0.08 | (0.21) | 146.5 | (16.56) | 26 | (0.66) |
| 20 | 450 | (232) | 10 | 31693-2 | 9.06 | (40.32) | 0.05 | (0.13) | 148.2 | (16.75) | 23 | (0.58) |
| 8 | 330 | (166) | 20 | 31693-2 | 12.76 | (56.79) | 0.07 | (0.18) | 146.9 | (16.60) | 24 | (0.61) |
| 10 | 375 | (191) | 20 | 31693-1 | 5.03 | (22.39) | 0.01 | (0.03) | 145.4 | (16.43) | 27 | (0.69) |

*Dynatup
[1](160°C)

Table VII

Tray Properties

| Preheat sec | Sheet temp, °F (°C) | seconds in 320 °F[1] mould | Sheet No. | Crystallinity (via DSC) % | forming results | tray density, g/cm$^3$ |
|---|---|---|---|---|---|---|
| 4 | 240 (116) | 10 | 31693-1 | 21.79 | poor release | 0.8771 |
| 6 | 275 (135) | 10 | 31693-1 | 21.08 | poor release | 0.8812 |
| 8 | 295 (146) | 10 | 31693-1 | 23.64 | OK rough | 0.8965 |
| 10 | 340 (171) | 10 | 31693-1 | 23.10 | OK rough | 0.8026 |
| 15 | 380 (193) | 10 | 31693-1 | 22.91 | OK rough | 0.7892 |
| 20 | 425 (218) | 10 | 31693-1 | 21.69 | OK rough | 0.8558 |
| 25 | 460 (238) | 10 | 31693-1 | ---- | won't form | ---- |
| 4 | 275 (135) | 20 | 31693-1 | 23.86 | OK rough | 0.8409 |
| 6 | 310 (154) | 20 | 31693-1 | 22.94 | OK rough | 0.8412 |
| 10 | 320 (160) | 20 | 31693-1 | 22.23 | OK rough | 0.7650 |
| 15 | 420 (216) | 20 | 31693-1 | 24.16 | OK rough | 0.7913 |
| 4 | 240 (116) | 10 | 31693-2 | --- | poor release | 0.8385 |
| 6 | 280 (138) | 10 | 31693-2 | 22.93 | OK | 0.8027 |
| 8 | 270 (132) | 10 | 31693-2 | --- | OK, thin | 0.8340 |

EP 0 649 874 B1

Table VII (continued)

Tray Properties

| Preheat sec | Sheet temp, °F (°C) | seconds in 320 °F[1] mould | Sheet No. | Crystallinity (via DSC) % | forming results | tray density, g/cm$^3$ |
|---|---|---|---|---|---|---|
| 10 | 350 (177) | 10 | 31693-2 | 20.57 | OK,large cells | 0.7562 |
| 15 | | 10 | 31693-2 | 23.93 | OK,large cells | 0.7343 |
| 20 | 450 (232) | 10 | 31693-2 | --- | sag,poor form | 0.9392 |
| 8 | 330 (166) | 20 | 31693-2 | 20.07 | OK,large cells | 0.7534 |
| 10 | 375 (191) | 20 | 31693-1 | 22.44 | OK,large cells | 0.7238 |

[1] (160°C)

<u>Example 4</u> (to illustrate the invention)

Five samples of sheet with various nucleant compositions were extruded on a 2½ inch (63½ mm) John Brown extruder. Specifically, these sheets were (1) a control sheet, [052193-1], having 3 weight percent NA-1' nucleant, (2) sheet having 0.1 weight percent PTFE and 1.1 weight percent NA-1' mixed into PET (TTF 9552) during extrusion, (3) sheet having 0.3 weight percent PTFE and 1.1 weight percent NA-1' mixed into PET (TTF 9552) during extusion, [052193-3], (4) sheet having 0.1 weight percent PTFE and 1.1 weight percent NA-1' dry mixed into TTF 9552 resin [052193-4] and finally (5) sheet having 0.3 weight percent PTFE and 1.1 percent NA-1' dry mixed into TTF 9552 resin [052193-5]. TTF 9552 is a polyethylene terephthalate having an I. V. of 0.95 dl/gm.

Trays from the sheet rolls were thermoformed on a Comet thermoformer. The thermoforming cycle included 10 seconds preheat, 10 seconds forming and holding in a 320°F (160°C) mould, and cooling. The trays were stamped out using a steel rule die cutter and an USM Emhart Hytronic cutting machine model Bl. These trays were tested for average weight of a tray, density of trays and sheets, bake cycle at 400°F (204°C), water fill test, Dynatup impact [at -20°F (-29°C) and room temperature], tensile strength and elongation in the machine and transverse directions, Young's modulus, microscopic examination, thickness, crystallinity via DSC of the trays, and melt viscosity.

Extrusion parameters used to make the five rolls of sheet are as follows: The metering pump speed was set to give 160 pounds per hour (2.02 x $10^{-2}$ kg/s) output. This was set to duplicate the fast speed needed for economic commercial extrusions. The take-up rate for the sheet at that output rate was 9.8 fpm (0.050 m/s). One hundred (100) feet (30.5 m) of each of the five samples was made for further testing. Sections of the roll were cut for thermoforming of trays. The thermoforming cycle was set at 10 seconds in the oven to achieve 300°F (149°C) preheat temperature of the sheet. The mould [320°F (160°C)] was raised and the sheet was thermoformed to a tray, holding the part in the mould for 10 seconds. The tray was cooled and trimmed using a steel rule die cutter. Nitrogen at a back pressure of about 3250 psi (22408 KPa) was injected into the melt at a rate of about 2.5 standard litres per hour. Melt temperature in the extruder was about 510°F (266°C). Extruder pressure ahead of the die was between 2500 and 2780 psi (17237 and 19167 kPa).

Table VIII lists density data obtained after the extrusion and thermoforming of the trays. The control formulation has the highest density in both sheet and trays. The density of the PTFE is 2.28 g/cm$^3$, so the addition of the heavier material would be expected to cause the overall density to increase.

Because of better gassing tendency of the PTFE containing sheet, its density is actually lower after extrusion. Also, the thermoforming operation lowers the density due to expansion of the gas cells. In each case the density of the tray is less than the density of the sheet from which it was formed.

Further, it is clear that the density of the sheet with 0.3 weight percent PTFE (see sample -3 and -5 in Table VIII) is lower than the density of the sheet with 0.1 weight percent PTFE (sample -2 and -4).

Table IX lists the impact data for the trays as measured on a Dynatup testing instrument at room temperature and -20°F (-29°C). PTFE at 0.1 weight percent (sample -2 and -4) improves impact at both room temperature and at -20°F (-29°C). PTFE at 0.3 weight percent (samples -3 and-5) improves the impact at room temperature but lowers the impact at -20°F (-29°C). This may be caused by poorer dispersion of PTFE at the higher concentration.

Table X gives the tensile strength, elongation and Young's Modulus for the sheet in both the machine direction, and the transverse direction for the trays. From the table it can be seen that for the PTFE containing sheet, the tensile strength is higher and the elongation is less.

Microscopic analysis of the trays revealed that the gas cells in the control tray (052193-1) were larger than the other samples. The largest gas cells in the field of magnification were measured with light passing through the tray and a magnification of 30X. The cells were elliptical with average sizes as follows:

052193-1 - 19.6 X 38.4 mils (0.50 x 0.98 mm)
052193-2 - 10.6 X 19.2 mils (0.27 x 0.49 mm)
052193-3 - 11.2 X 16.8 mils (0.28 x 0.43 mm)
052193-4 - 12.6 X 14.6 mils (0.32 x 0.37 mm)
052193-5 - 11.2 X 20.2 mils (0.28 x 0.51 mm)

All of the trays had both large and small gas cells with the smallest being less than 1 mil (0.0254 mm) diameter and difficult to measure with a stereoscope.

Examination of the surface of the sheets and the trays revealed that the control (052193-1) had more "craters" than the other four samples. The "roughness" of the surface may be caused by the walls of the craters protruding from the surface.

In oven testing [1/2 hour at 400°F (204°C)], none of the samples exhibited any odour or colour change or distortion. All five tray samples had suitable oven aging characteristics. The five trays for each roll were filled with water and examined for leaks after 24 hours. None had any leakage.

Table VIII

| Tray Densities | | |
|---|---|---|
| Sample No. | Sheet Density g/cm$^3$ | Tray Density g/cm$^3$ |
| 52193-1 | 0.9936 | 0.9023 |
| 52193-2 | 0.9534 | 0.8432 |
| 52193-3 | 0.9457 | 0.8121 |
| 52193-4 | 0.9390 | 0.8172 |
| 52193-5 | 0.9385 | 0.8049 |

**Table IX**

Impact Tests (Dynatup)

5x5x1 inch (127 x 127 x 25.4 mm) Trays

| Sample | Load lbs (kg) | Deflection inches (mm) | Impact, in-lbs (J) | | Test Temperature °F (°C) | Thickness mils (mm) |
|--------|---------------|------------------------|--------|---|--------------------------|---------------------|
| 52193-1 | 19.45 (8.82) | 0.11 (2.79) | 157.2 | (17.76) | -20 (-29) | 20.8 (0.53) |
| 52193-2 | 23.05 (10.46) | 0.13 (3.30) | 157.2 | (17.76) | -20 (-29) | 21.8 (0.55) |
| 52193-3 | 18.53 (8.41) | 0.11 (2.79) | 157.3 | (17.77) | -20 (-29) | 23.4 (0.59) |
| 52193-4 | 22.74 (10.31) | 0.13 (3.30) | 157.1 | (17.75) | -20 (-29) | 22.4 (0.57) |
| 52193-5 | 14.86 (6.74) | 0.09 (2.29) | 156.5 | (17.68) | -20 (-29) | 22.2 (0.56) |
| 52193-1 | 21.15 (9.59) | 0.11 (2.79) | 157.6 | (17.81) | 74 (23) | 20.8 (0.53) |
| 52193-2 | 23.37 (10.60) | 0.12 (3.05) | 157.5 | (17.80) | 74 (23) | 21.8 (0.55) |
| 52193-3 | 25.03 (11.35) | 0.12 (3.05) | 157.5 | (17.80) | 74 (23) | 23.4 (0.59) |
| 52193-4 | 24.76 (11.23) | 0.12 (3.05) | 156.7 | (17.70) | 74 (23) | 22.4 (0.57) |
| 52193-5 | 25.03 (11.35) | 0.12 (3.05) | 157.5 | (17.80) | 74 (23) | 22.2 (0.56) |

**Table X**

Mechanical Properties

| Sample | Young's modulus psi (kPa) | Tensile strength psi (kPa) | Elongation % | Thickness mils (mm) |
|---|---|---|---|---|
| Trays | | | | |
| 52193-1 | 84850 (5.85 x $10^5$) | 2945 (2.03 x $10^4$) | 7.57 | 18.25 (0.46) |
| 52193-2 | 91970 (6.34 x $10^5$) | 3523 (2.43 x $10^4$) | 7.03 | 19.5 (0.50) |
| 52193-3 | 78530 (5.41 x $10^5$) | 2855 (1.97 x $10^4$) | 6.93 | 20.5 (0.52) |
| 52193-4 | 80270 (5.53 x $10^5$) | 2971 (2.05 x $10^4$) | 6.88 | 21.75 (0.55) |
| 52193-5 | 86780 5.98 x $10^5$) | 3353 (2.31 x $10^4$) | 7.62 | 20.6 (0.52) |
| Sheet (Transverse direction) | | | | |
| 52193-1 | 91240 (6.29 x $10^5$) | 2428 (1.67 x $10^4$) | 5.10 | 27.9 (0.71) |
| 52193-2 | 105000 (7.24 x $10^5$) | 3059 (2.11 x $10^4$) | 4.38 | 29.0 (0.74) |
| 52193-3 | 102300 (7.05 x $10^5$) | 2948 (2.03 x $10^4$)) | 4.50 | 32.0 (0.81) |
| 52193-4 | 104100 (7.18 x $10^5$) | 2957 (2.04 x $10^4$) | 4.57 | 29.7 (0.75) |
| 52193-5 | 106900 (7.37 x $10^5$) | 2965 (2.04 x $10^4$) | 4.42 | 31.6 (0.80) |
| Sheet (Machine direction) | | | | |
| 52193-1 | 106000 (7.31 x $10^5$) | 2990 (2.06 x $10^4$) | 5.28 | 28.5 (0.72) |
| 52193-2 | 111900 (7.72 x $10^5$) | 3386 (2.33 x $10^4$) | 4.74 | 29.4 (0.75) |
| 52193-3 | 106900 (7.37 x $10^5$) | 3168 (2.18 x $10^4$) | 4.27 | 29.2 (0.74) |
| 52193-4 | 110400 (7.61 x $10^5$) | 3321 (2.29 x $10^4$) | 4.55 | 30.0 (0.76) |
| 52193-5 | 108600 (7.49 x $10^5$) | 3317 (2.29 x $10^4$) | 4.70 | 30.0 (0.76) |

EP 0 649 874 B1

## Claims

1. A composition for making cellular sheets of crystalline polyester or thermoformed article(s) having a total crystallinity in the range of from 10 to 40 weight percent from such sheets, comprising:

   (a) in the range of from 80 weight percent or more of a polyethylene terephthalate having an intrinsic viscosity of at least 0.60 dl/g;
   (b) in the range of from 0.01 to 10 weight percent of polytetrafluoroethylene;
   (c) in the range of from 0.1 to 10 weight percent of linear low density polyethylene; and
   (d) sufficient bubbles of inert gas to provide a cellular sheet with a density in the range of from 0.04 to 1.25 g/cm$^3$.

2. The composition as claimed in claim 1, in which the linear low density polyethylene is present in an amount in the range of from 0.9 weight percent to 1.2 weight percent, and the polytetrafluoroethylene is present in an amount in the range of from 0.1 to 0.3 weight percent, said weights being based on total composition weight.

## Patentansprüche

1. Zusammensetzung zur Herstellung von zellularen Platten aus kristallinem Polyester oder von thermogeformten Artikeln mit einer Gesamtkristallinität im Bereich von 10 bis 40 Gew.-% aus solchen Platten, die

   (a) im Bereich von 80 Gew.-% oder mehr Polyethylenterephthalat mit einer intrinsischen Viskosität von zumindest 0,60 dl/g;
   (b) im Bereich von 0,01 bis 10 Gew.-% Polytertrafluorethylen;
   (c) im Bereich von 0,1 bis 10 Gew.-% lineares Polyethylen niedriger Dichte; und
   (d) ausreichend Luftblasen eines Inertgases, um eine zellulare Platte mit einer Dichte im Bereich von 0,04 bis 1,25 g/cm$^3$ bereitzustellen,

   umfassen.

2. Zusammensetzung nach Anspruch 1, in der das lineare Polyethylen niedriger Dichte in einer Menge im Bereich von 0,9 Gew.-% bis 1,2 Gew.-% und das Polytertrafluorethylen in einer Menge im Bereich von 0,1 bis 0,3 Gew.-% vorhanden sind, wobei die Gewichte auf dem Gesamtgewicht der Zusammensetzung basieren.

## Revendications

1. Composition pour préparer des feuilles cellulaires de polyester cristallin ou un ou des article(s) thermoformé(s) ayant une cristallinité totale dans l'intervalle de 10 à 40 pour cent en poids à partir de ces feuilles, comprenant :

   (a) dans l'intervalle de 80 pour cent en poids ou plus d'un poly(éthylène téréphtalate) ayant une viscosité intrinsèque d'au moins 0,60 dl/g ;

   (b) dans l'intervalle de 0,01 à 10 pour cent en poids de polytétrafluoroéthylène ;

   (c) dans l'intervalle de 0,1 à 10 pour cent en poids d'un polyéthylène basse densité linéaire ; et

   (d) suffisamment de bulles d'un gaz inerte pour obtenir une feuille cellulaire avec une densité dans l'intervalle de 0,04 à 1,25 g/cm$^3$.

2. Composition telle que revendiquée dans la revendication 1, dans laquelle le polyéthylène basse densité linéaire est présent en une quantité dans l'intervalle de 0,9 pour cent en poids à 1,2 pour cent en poids, et le polytétrafluoroéthylène est présent en une quantité dans l'intervalle de 0,1 à 0,3 pour cent en poids, lesdits poids étant rapportés au poids total de la composition.